# EUROPÄISCHE PATENTSCHRIFT

(11) **EP 3 560 005 B1**
(45) Veröffentlichungstag und Bekanntmachung des Hinweises auf die Patenterteilung: **24.02.2021**
(21) Anmeldenummer: 17765184.1
(22) Anmeldetag: 12.09.2017
(51) Int. Cl.: H01M 2/04

(54) **BEFESTIGUNGSANORDNUNG AN EINEM BATTERIEGEHÄUSE UND BATTERIEGEHÄUSE MIT EINER DERARTIGEN BEFESTIGUNGSANORDNUNG**
FIXING DEVICE FOR BATTERY CASING AND BATTERY CASING
DISPOSITIF DE FIXATION POUR BOÎTE DE BATTERIES ET BOÎTE DE BATTERIES

(30) Priorität: 20.12.2016 DE 102016225662
(43) Veröffentlichungstag der Anmeldung: 30.10.2019
(73) Patentinhaber: Volkswagen Aktiengesellschaft, 38440 Wolfsburg (DE)
(72) Erfinder: SCHRÖDER, Lutz, 31241 Ilsede (DE); WEIDEMANN, Daniel, 38118 Braunschweig (DE); HETTWER, Sandra, 31234 Edemissen (DE); RAULS, Oliver, 38116 Braunschweig (DE)
(86) Internationale Anmeldenummer: PCT/EP2017/072918
(87) Internationale Veröffentlichungsnummer: WO 2018/114067

(56) Entgegenhaltungen:
- EP-A1- 2 479 818
- WO-A1-2016/049836
- DE-A1-102012 004 135
- US-A1- 2014 120 413

## Beschreibung

Die Erfindung betrifft eine Batteriegehäuse mit einer Anordnung zur Befestigung einer Oberschale oder eines Deckels an einer Unterschale des Batteriegehäuses nach dem Oberbegriff des Patentanspruchs 1 der Erfindung.

Die DE 10 2012 004 135 A1 beschreibt einen Batteriekasten einer Traktionsbatterie, mit einer Oberschale und einer Unterschale, welche jeweils an einem umlaufenden Randbereich zueinander korrespondierend einen Auflageflansch ausbilden. Die Auflageflansche liegen unter Vermittlung einer Dichtung aufeinander und sind mittels einer Vielzahl Befestigungsklammern aus beispielsweise Federstahl untereinander verbunden.

Aus der WO 2016/049836 A1 ist ein Batteriegehäuse mit einer Oberschale und einer Unterschale bekannt, welche im Bereich zueinander korrespondierender und übereinandergelegter Auflageflansche mittels eines Befestigungselements kraftschlüssig verbunden sind. Gemäß einer Ausführungsform ist dazu ein Rahmenelement vorgesehen, welches einen U-förmigen Querschnitt und demnach eine erste Wand, eine zweite Wand und eine Verbindungswand aufweist. Das Rahmenelement wird derart auf die übereinander gelegten Auflageflansche geschoben, dass die Auflageflansche in dem durch das Rahmenelement definierten Hohlraum aufgenommen sind. Die erste und zweite Wand weisen zueinander korrespondierende respektive fluchtende Durchgangslöcher auf, die wiederum mit Durchgangslöchern in den Auflageflanschen korrespondieren respektive fluchten. Die zueinander korrespondierenden Durchgangslöcher sind jeweils von einer Schraube durchsetzt, auf welche jeweils eine Mutter geschraubt ist. Gemäß einer weiteren Ausführungsform ist das im Querschnitt U-förmige Rahmenelement, welches einen Aufnahmeschlitz für die Auflageflansche aufweist, aus einem elastischen Material gebildet. Die Breite des Aufnahmeschlitzes ist geringfügig kleiner der Gesamtdicke der Auflageflansche, so dass im Zusammenbau die Auflageflansche zusammengepresst werden. Um zu verhindern, dass sich die Aufnahmeflansche vom Rahmenelement lösen, weist zumindest einer der Aufnahmeflansche einen Vorsprung auf, der im Zusammenbau von einer entsprechenden Aussparung im Rahmenelement formschlüssig aufgenommen ist.

Aus der EP 2 479 818 A1 ist ein Batteriegehäuse mit einem Gehäusekörper und einer Abdeckung bekannt. Der Gehäusekörper und die Abdeckung sind im Bereich zueinander korrespondierender und übereinandergelegter Auflageflansche mittels eines Befestigungselements untereinander verbunden. Der Auflageflansch der Abdeckung weist an seinem vorderen Ende einen nach oben vorstehenden Vorsprung auf und bildet so eine Vertiefung aus. Am Gehäusekörper ist eine erste Platte angeordnet, die eine Seitenplatte des Gehäusekörpers abdeckt. Die erste Platte weist angeschweißte, nach außen ragende Stehbolzen auf. Der ersten Platte ist eine zweite Platte zugeordnet, die mittels eines an derselben ausgebildeten Hakens in besagte Vertiefung eindringt und so an der Abdeckung aufgehängt ist. Die zweite Platte weist darüber hinaus einen nach unten gerichteten vorspringenden Abschnitt mit einem Bolzenloch auf, in das der entsprechende Stehbolzen der ersten Platte eingesetzt werden kann.

Aus der US 2014/012413 A1 ist ein Batteriegehäuse mit einem ersten und einem zweiten Gehäuseteil bekannt. Die Gehäuseteile weisen zueinander korrespondierende Ränder auf und sind im Bereich besagter Ränder mittels eines sogenannten Crimprings durch Crimpen untereinander verbunden.

Aufgabe der Erfindung ist es, eine im Hinblick auf den Stand der Technik alternatives Batteriegehäuse zu schaffen, welches aufwandsreduziert eine sichere Befestigung einer Oberschale oder eines Deckels an einer Unterschale desselben gewährleistet.

Ausgehend von einem Batteriegehäuse mit einer Anordnung zur Befestigung einer Oberschale oder eines Deckels an einer Unterschale eines Batteriegehäuses, welche Befestigungsanordnung zumindest ein Befestigungselement aufweist, mittels dem im Bereich zueinander korrespondierender und übereinander gelegter Auflageflansche die Oberschale oder der Deckel mit der Unterschale kraftschlüssig verbunden ist, wobei das zumindest eine Befestigungselement durch ein zumindest abschnittsweise im Querschnitt U-profilförmig ausgebildetes Schienenelement gebildet ist, welches Schienenelement einen Steg sowie einen Ober- und einen Untergurt aufweist und von der Stirnkante der übereinander gelegten Auflageflansche her auf diese aufgeschoben ist, wird die gestellte Aufgabe dadurch gelöst, dass das Schienenelement im Bereich des Ober- und/oder Untergurts zumindest eine zur besagten Stirnkante hin offene Aussparung aufweist, die seitlich vom Ober- oder Untergurt eingefasst ist, wobei der Aussparung eine Erhebung im unmittelbar benachbarten Auflageflansch derart zugeordnet ist, dass infolge Aufschieben des Schienenelements auf die Auflageflansche das Schienenelement eine Vormontagelage einnimmt, indem die Erhebung von der Aussparung aufgenommen ist, und dass infolge einer nachgeschalteten Bewegung des Schienenelements in Längsrichtung der Auflageflansche die Erhebung in einer Endmontagelage des Schienenelements unterhalb des Ober- oder Untergurts positioniert und das Schienenelement mit den Auflageflanschen kraftschlüssig verbunden ist.

Durch diese Maßnahme ist eine schnelle und sichere sowie dichte Verbindung zwischen der Oberschale oder dem Deckel und der Unterschale eines Batteriegehäuses ermöglicht. Im Hinblick auf ein Batteriegehäuse beispielsweise einer Traktionsbatterie eines Fahrzeugs, welches Batteriegehäuse im Allgemeinen einen quader- oder würfelförmigen Hohlkörper zur Aufnahme von Batteriemodulen mit Batteriezellen ausbildet, ergeben sich hierdurch vier Randabschnitte von vorzugsweise umlaufenden Auflageflanschen der Oberschale oder des Deckels und der Unterschale des Batteriegehäuses, woraus gemäß einer besonders einfachen und kostengünstigen Ausführungsform der Erfindung maximal vier derartige Schienenelemente resultieren, die sich jeweils über annähern den gesamten Verlauf eines Randabschnitts erstrecken können. Eine Vielzahl von Befestigungselementen, wie sie nach dem Stand der Technik favorisiert wird, ist vorliegend entbehrlich. Die besagte Erhebung kann beispielsweise durch eine Einprägung, Sicke oder Wulst gebildet sein.

Die Unteransprüche beschreiben bevorzugte Weiterbildungen oder Ausgestaltungen der Erfindung.

In vorteilhafter Weiterbildung der Erfindung ist die Erhebung derart mit Übermaß in der Höhe ausgebildet, dass das Schienenelement in der besagten Endmontagelage unter Vorspannung mit den Auflageflanschen verbunden ist, woraus eine besonders fester und dichter Fügeverbund resultiert. Um die Verschiebebewegung des Schienenelements insbesondere in Längsrichtung der Auflageflansche zu erleichtern, bildet die Erhebung des betreffenden Auflageflansches zumindest in besagter Verschieberichtung längs der Auflageflansche eine Rampe aus. Wie die Erfindung weiter vorsieht, ist das Schienenelement in der besagten Endmontagelage vorteilhaft gegen eine Bewegung des Schienenelements quer zur Längserstreckung der Auflageflansche gesichert. Die besagte Sicherung gegen eine Bewegung des Schienenelements quer zur Längserstreckung der Auflageflansche ist bevorzugt durch einen Fortsatz bewirkt, der im Querschnitt des Ober- oder Untergurtes gesehen am oder nahe des freien Endes desselben angeordnet und zum unmittelbar benachbarten, die Erhebung aufweisenden Auflageflansch hin gerichtet ist. Der besagte Fortsatz kann durch eine Einprägung, Sicke oder sonstige Erhebung, wie beispielsweise eine Wulst, am oder nahe des freien Endes des Ober- oder Untergurtes oder durch eine Abstellung des freien Endes des Ober- oder Untergurtes gebildet sein. Hierdurch ist das Schienenelement gegen unbeabsichtigtes, insbesondere selbständiges Lösen infolge beispielsweise im Fahrbetrieb eines Fahrzeugs zu verzeichnender Schwingungen wirkungsvoll gesichert. Um die Sicherheit gegen unbeabsichtigtes, insbesondere selbständiges Lösen des Schienenelements noch weiter zu erhöhen, ist das Schienenelement in der besagten Endmontagelage bevorzugt auch gegen eine Bewegung des Schienenelements in Längsrichtung der Auflageflansche gesichert. Eine derartige Sicherung ist weiter bevorzugt durch zumindest ein lösbares, mechanisches Befestigungsmittel bewirkt, welches beispielsweise durch eine Schraube, einen Stift, einen Splint oder dgl. mehr gebildet ist und das Schienenelement mit der Oberschale oder dem Deckel und/oder der Unterschale verbindet.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: äußerst schematisch ein mit einer Traktionsbatterie ausgestattetes Fahrzeug,
- Fig. 2: eine perspektivische Seitenansicht eines Batteriegehäuses besagter Traktionsbatterie nach Fig. 1, welches Batteriegehäuse durch eine Unterschale und eine Oberschale bzw. einen Deckel gebildet ist und die erfindungswesentliche Befestigungsanordnung aufweist,
- Fig. 3: die Einzelheit Z nach Fig. 1 mit der Darstellung eines Befestigungselements zur Befestigung der Oberschale bzw. des Deckels an der Unterschale in einer Vormontagelage,
- Fig. 4: die Einzelheit Z' nach Fig. 1 mit der Darstellung des besagten Befestigungselements in einer Endmontagelage,
- Fig. 5: eine perspektivische Seitenansicht auf eine weiter fortgebildete Befestigungsanordnung,
- Fig. 6: eine weitere Ausführungsvariante der Befestigungsanordnung in einer perspektivischen Aufsicht mit der Darstellung des Befestigungselements in der Vormontagelage,
- Fig. 7: den Schnitt "I-I" nach Fig. 6,
- Fig. 8: das Befestigungselement nach Fig. 6 und 7 in der Endmontagelage,
- Fig. 9: den Schnitt "II-II" nach Fig. 8, und
- Fig. 10: den Schnitt "III-III" nach Fig. 8.

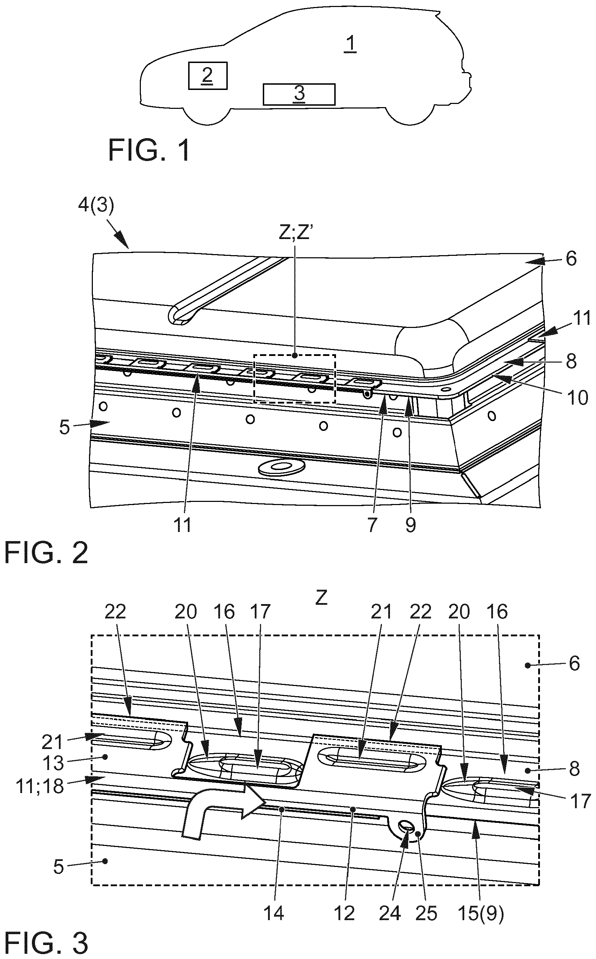

Fig. 1 zeigt zunächst ein Fahrzeug 1, vorliegend einen Personenkraftwagen, mit einem Elektromotor 2 als Antriebsmotor und einer eine Traktions- bzw. Hochvoltbatterie ausbildenden Batteriebaugruppe 3. Gemäß diesem Ausführungsbeispiel handelt sich somit um ein rein elektrisch betriebenes Fahrzeug 1. Durch die Erfindung mit erfasst ist insbesondere auch ein sogenanntes Hybridfahrzeug, welches neben einem oder mehreren Elektromoren 2 auch einen Verbrennungsmotor aufweist (nicht zeichnerisch dargestellt). Herkömmlich sind ein, zwei oder mehr Batteriezellen in zumindest einem Modulgehäuse zu einem nicht zeichnerisch dargestellten Batteriemodul zusammengefasst. Ein, zwei oder mehrere derartige Batteriemodule sind in einem in Fig. 2 dargestellten Batteriegehäuse 4 angeordnet. Das in Fig. 2 nur teilweise dargestellte Batteriegehäuse 4 weist eine Unterschale 5 auf, auf welcher das oder die Batteriemodul/e abgestellt sind. Der Unterschale 5 ist vorliegend eine das Batteriegehäuse 4 verschließende Oberschale 6 zugeordnet, welche von oben auf die Unterschale 5 aufgesetzt und mit derselben verbunden ist/wird. Die Erfindung beschränkt sich jedoch nicht auf besagte Oberschale 6, sondern erfasst selbstverständlich auch einen nicht zeichnerisch dargestellten Deckel, der eine von der Oberschale 6 abweichende Gestalt aufweist, beispielsweise plan ausgebildet ist. Die Unter- und Oberschale 5, 6 bestehen bevorzugt aus einem Kunststoff, aus einem faser- und/oder mittels Einleger verstärkten Kunststoff oder aus einem Metall.

Das Batteriegehäuse 4 bildet einen quader- oder würfelförmigen Hohlkörper zur Aufnahme besagter Batteriemodule aus. Die Unterschale 5 und die Oberschale 6 des Batteriegehäuses 4 weisen jeweils einen nach außen abgestellten, bevorzugt umlaufenden Auflageflansch 7, 8 auf. Die Auflageflansche 7, 8 sind im Zusammenbau gegebenenfalls unter Vermittlung einer nicht zeichnerisch dargestellte Ringdichtung übereinander gelegt und unter Zuhilfenahme von separat hergestellten Befestigungselementen untereinander kraftschlüssig dicht verbunden. Aufgrund der quader- oder würfelförmigen Ausbildung des Batteriegehäuses 4 ergeben sich im Bereich der Auflageflansche 7, 8 vier Randabschnitte 9, 10, von denen in Fig. 2 zwei Randabschnitte 9, 10 ersichtlich sind. Lediglich beispielgebend ist jedem Randabschnitt 9, 10 je ein Befestigungselement zugeordnet.

### Ausführungsvariante 1 (Fig. 2-5):

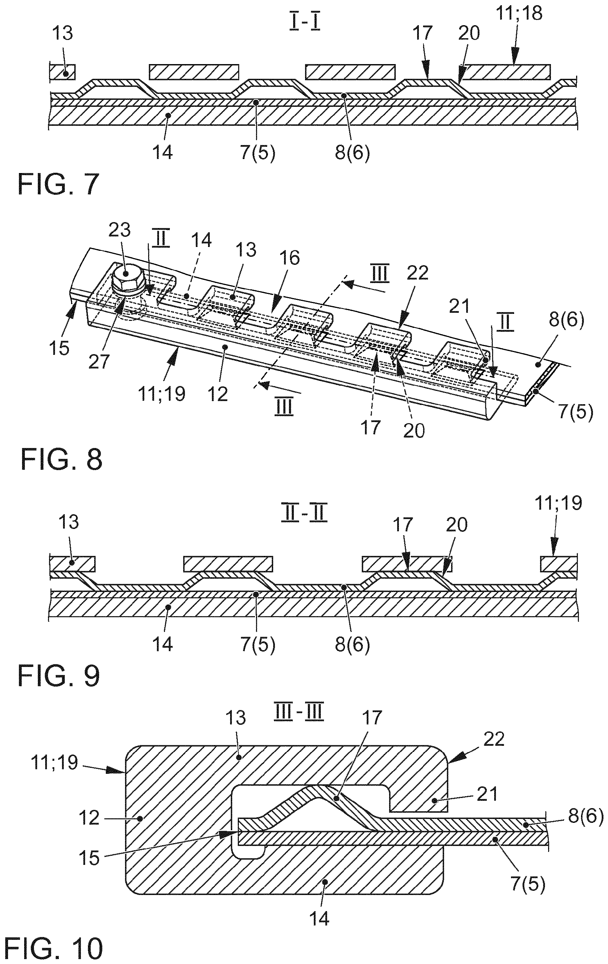

Gemäß einer ersten Ausführungsvariante der Erfindung ist ein jedes Befestigungselement durch ein im Querschnitt U-profilförmiges Schienenelement 11 gebildet, welches einen Steg 12 sowie einen Obergurt 13 und einen Untergurt 14 aufweist (vgl. hierzu beispielgebend auch Fig. 10, welche eine zweite, weiter unten beschriebene Ausführungsvariante der Erfindung betrifft). Im montierten Zustand des Schienenelements 11 werden die übereinander respektive unmittelbar oder mittelbar über besagte Ringdichtung aufeinandergelegten Auflageflansche 7, 8 von Obergurt 13 und Untergurt 14 sozusagen klammerartig umfasst, wobei sich das Schienenelement 11 mittels des Steges 12 an der Stirnkante 15 der Auflageflansche 7, 8 abstützt. Das Schienenelement 11 ist demnach von der besagten Stirnkante 15 her, d.h. quer zur Längserstreckung der Auflageflansche 7, 8 auf dieselben aufgeschoben.

Das Schienenelement 11 ist gemäß einer bevorzugten Ausführungsform der Erfindung als Stanzteil ausgebildet und besteht weiter bevorzugt aus Metallblech, insbesondere Stahlblech. Die Erfindung beschränkt sich jedoch nicht auf einen metallenen Werkstoff, sondern erfasst auch ein Schienenelement 11, welches beispielsweise aus einem Kunststoff, aus einem faser- oder anderweitig verstärkten Kunststoff oder aus einem sonstigen an sich bekannten, geeigneten Werkstoff, insbesondere Verbundwerkstoff besteht (nicht zeichnerisch dargestellt).

Der Obergurt 13 des Schienenelements 11 weist eine Mehrzahl zur besagten Stirnkante 15 hin offene Aussparungen 16 auf, die seitlich vom Obergurt 13 respektive Material desselben eingefasst sind. Es ist sozusagen eine kammartige Struktur des Obergurts 13 mit zueinander beabstandet angeordneten Zähnen ausgebildet. Einer jeden Aussparung 16 ist am Auflageflansch 8 der Oberschale 6 eine zum Obergurt 13 gerichtete Erhebung 17 zugeordnet, welche während des Aufschiebens des Schienenelements 11 auf die Auflageflansche 7, 8 von der betreffenden Aussparung 16 aufgenommen wird. Hierdurch ergibt sich eine Vormontagelage 18 des Schienenelements 11, welche in Fig. 3 ersichtlich ist. Die Erhebung 17 ist gemäß diesem Ausführungsbeispiel durch eine Einprägung gebildet. Alternativ kann diese beispielsweise auch durch eine Sicke im Schienenelement 11 oder durch eine Wulst bzw. noppenartige Erhebung 17 gebildet sein (nicht zeichnerisch dargestellt).

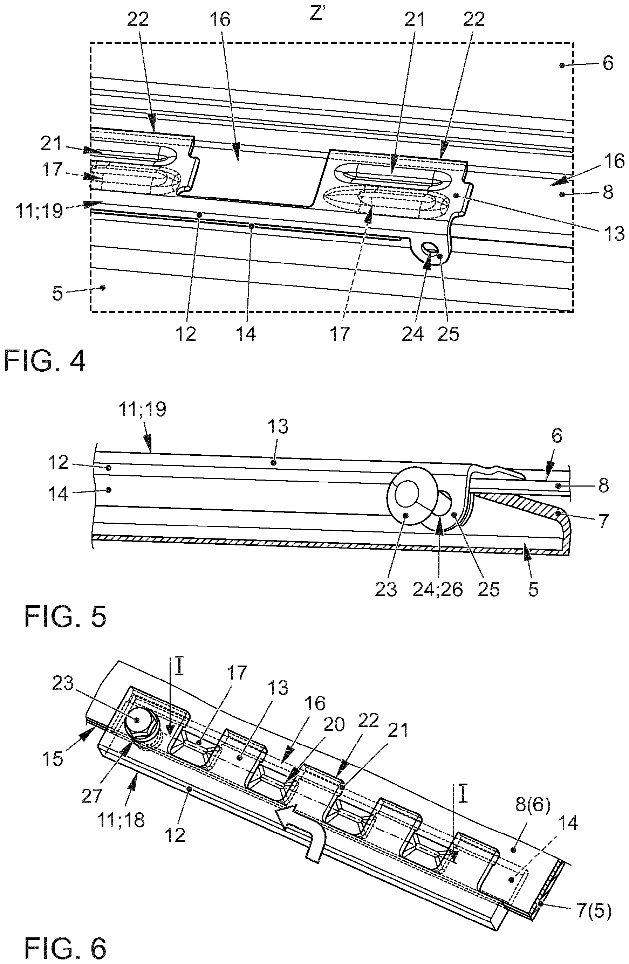

Ausgehend von der besagten Vormontagelage 18 des Schienenelements 11 ist dasselbe durch eine nachgeschalte Bewegung in Längsrichtung der Auflageflansche 7, 8 in eine Endmontagelage 19 überführbar, wodurch die Erhebung 17 unterhalb eines die jeweilige Aussparung 16 einfassenden Materialabschnitts respektive Zahns des Obergurts 1 positioniert und geklemmt ist (vgl. insbes. Fig. 2 und 4). Besagte Klemmung resultiert aus einer Ausbildung der Erhebung 17 mit Übermaß in der Höhe, indem das Schienenelement 11 in seiner Endmontagelege 19 auf das höchste Maß der Erhebung 17 geführt wird und so unter Vorspannung mit den Auflageflanschen 7, 8 verbunden ist.

Wie insbesondere der Fig. 3 zu entnehmen ist, bilden die Erhebungen 17 in Verschieberichtung längs der Auflageflansche 7, 8 eine Rampe 20 aus. Hierdurch ist die besagte Verschiebebewegung bzw. das Überführen der Erhebungen 17 unter den die Aussparung 16 einfassenden Materialabschnitt respektive Zahn des Obergurts 1 erleichtert.

Wie den Fig. 3 und 4 noch zu entnehmen ist, ist das Schienenelement 11 in seiner Endmontagelage 19 gegen eine Bewegung quer zur Längserstreckung der Auflageflansche 7, 8 gesichert. Diese Sicherung ist durch einen Fortsatz 21 nahe des im Querschnitt gesehen freien Endes 22 des Obergurtes 13 bzw. des Zahnes des Schienenelements 11 bewirkt, welcher Fortsatz 21 zum Auflageflansch 8 der Oberschale 6 hin gerichtet ist (Fig. 4). Vorliegend ist der besagte Fortsatz 21 lediglich beispielgebend durch eine Einprägung im Obergurt 13 bzw. in dessen Zahn gebildet. Demgegenüber kann der Fortsatz 21 beispielsweise auch durch eine sickenförmige Ausbildung des Obergurtes 13, durch eine Wulst bzw. noppenartige Erhebung oder dgl. mehr gebildet sein (nicht zeichnerisch dargestellt). Das Schienenelement 11 ist demnach in seiner Endmontagelage 19 durch den Fortsatz 21 an einer Querbewegung von den Auflageflanschen 7, 8 weg gehindert, da sich in diesem Fall der Fortsatz 21 an der Erhebung 17 abstützt bzw. abstützen würde.

Darüber hinaus ist das Schienenelement 11 in seiner Endmontagelage 19 gegen eine Bewegung in Längsrichtung der Auflageflansche 7, 8 gesichert. Diese Sicherung wird gemäß diesem Ausführungsbeispiel durch ein lösbares, mechanisches Befestigungsmittel 23 bewirkt, welches vorliegend durch einen Sicherungs-Stift gebildet ist, der quer zur Längserstreckung der Auflageflansche 7, 8 eine erste Bohrung 24 in einem parallel zum Steg 12 angeordneten Flansch 25 des Schienenelements 11 durchsetzt und in eine korrespondierende zweite Bohrung 26 der Oberschale 6 eingreift. Der besagte Stift kann dazu beispielsweise nicht zeichnerisch dargestellte Verrastungsmittel aufweisen, wodurch ein unbeabsichtigtes Lösens desselben verhindert ist. Alternativ kann das Befestigungsmittel 23 auch durch eine Schraube, einen Splint oder dgl. mehr gebildet sein (nicht zeichnerisch dargestellt).

### Ausführungsvariante 2 (Fig. 6-10):

Die Fig. 6 bis 10 zeigen eine zweite bevorzugte Ausführungsvariante der Erfindung, wobei funktionsgleiche Teile mit gleichen Bezugszeichen wie in den vorherigen Zeichnungsfiguren bezeichnet sind, so dass zu deren Erläuterung auch auf die vorstehende Beschreibung der ersten Ausführungsvariante der Erfindung verwiesen wird.

Diese zweite Ausführungsvariante der Erfindung unterscheidet zur vorbeschriebenen ersten Ausführungsvariante zum einen dahingehend, dass der Fortsatz 21 zur Sicherung des Schienenelements 11 in seiner Endmontagelage 19 gegen eine Bewegung quer zur Längserstreckung der Auflageflansche 7, 8 durch eine Abstellung des im Querschnitt gesehen freien Endes 22 des Obergurtes 13 respektive dessen Zahnes bewirkt ist, welche Abstellung zum Auflageflansch 8 der Oberschale 6 hin gerichtet ist (vgl. insbes. Fig. 8 und 10). Zum anderen ist das mechanische Befestigungsmittel 23 zur Sicherung des Schienenelementes 11 in seiner Endmontagelage 19 gegen eine Bewegung in Längsrichtung der Auflageflansche 7, 8 durch eine Befestigungsschraube gebildet, welche in eine Gewindebohrung 27 des Obergurtes 13 des Schienenelements 11 respektive eines Zahnes desselben eingeschraubt ist und mit Vorspannung gegen die Auflageflansche 7, 8 schraubbar ist (vgl. insbes. Fig. 6 und 8).

Die vorstehend beschriebenen Ausführungsvarianten stellen im Wesentlichen auf ein Schienenelement 11 ab, dessen Obergurt 13 kammartig ausgebildet ist und durch die besondere Ausgestaltung des Auflageflansches 8 der Oberschale 6 mit Erhebungen 17 kraftschlüssig mit den Auflageflanschen 7, 8 verbunden oder verbindbar ist. Die Erfindung beschränkt sich jedoch nicht auf diese konkret beschriebenen Ausführungsvarianten, sondern erfasst auch nicht zeichnerisch dargestellte Ausführungsvarianten, bei denen der Untergurt 14 oder sowohl Obergurt 13 als auch Untergurt 14 im Sinne der Erfindung kammartig ausgebildet sind und dem Untergurt 14 Erhebungen 17 der beschrieben Art an der Unterschale 5 oder sowohl dem Ober- als auch dem Untergurt 13, 14 Erhebungen 17 der beschrieben Art an der Oberschale 6 bzw. der Unterschale 5 zugeordnet sind.

### Bezugszeichenliste

- 1: Fahrzeug
- 2: Elektromotor
- 3: Batteriebaugruppe
- 4: Batteriegehäuse
- 5: Unterschale
- 6: Oberschale
- 7: Auflageflansch (Unterschale 5)
- 8: Auflageflansch (Oberschale 6)
- 9: Randabschnitt
- 10: Randabschnitt
- 11: Schienenelement
- 12: Steg
- 13: Obergurt
- 14: Untergurt
- 15: Stirnkante
- 16: Aussparung
- 17: Erhebung
- 18: Vormontagelage
- 19: Endmontagelage
- 20: Rampe
- 21: Fortsatz
- 22: freies Ende (Obergurt 13)
- 23: Befestigungsmittel
- 24: Bohrung
- 25: Flansch
- 26: Bohrung
- 27: Gewindebohrung

## Patentansprüche

1. Batteriegehäuse (4), mit einer Anordnung zur Befestigung einer Oberschale (5) oder eines Deckels an einer Unterschale (5) des Batteriegehäuses (4), welche Befestigungsanordnung zumindest ein Befestigungselement aufweist, mittels dem im Bereich zueinander korrespondierender und übereinander gelegter Auflageflansche (7, 8) die Oberschale (6) oder der Deckel mit der Unterschale (5) kraftschlüssig verbunden ist, wobei das zumindest eine Befestigungselement durch ein zumindest abschnittsweise im Querschnitt U-profilförmig ausgebildetes Schienenelement (11) gebildet ist, welches Schienenelement (11) einen Steg (12) sowie einen Ober- und einen Untergurt (13, 14) aufweist und von der Stirnkante (15) der übereinander gelegten Auflageflansche (7, 8) her auf diese aufgeschoben ist, **dadurch gekennzeichnet, dass** das Schienenelement (11) im Bereich des Ober- und/oder Untergurts (13, 14) zumindest eine zur besagten Stirnkante (15) hin offene Aussparung (16) aufweist, die seitlich vom Ober- oder Untergurt (13, 14) eingefasst ist, wobei der Aussparung (16) eine Erhebung (17) im unmittelbar benachbarten Auflageflansch (7, 8) derart zugeordnet ist, dass infolge Aufschieben des Schienenelements (11) auf die Auflageflansche (7, 8) das Schienenelement (11) eine Vormontagelage (18) einnimmt, indem die Erhebung (17) von der Aussparung (16) aufgenommen ist, und dass infolge einer nachgeschalteten Bewegung des Schienenelements (11) in Längsrichtung der Auflageflansche (7, 8) die Erhebung (17) in einer Endmontagelage (19) des Schienenelements (11) unterhalb des Ober- oder Untergurts (13, 14) positioniert und das Schienenelement (11) mit den Auflageflanschen (7, 8) kraftschlüssig verbunden ist.

2. Batteriegehäuse (4) nach Anspruch 1, **dadurch gekennzeichnet, dass** die Erhebung (17) derart mit Übermaß in der Höhe ausgebildet ist, dass das Schienenelement (11) in der besagten Endmontagelage (19) unter Vorspannung mit den Auflageflanschen (7, 8) verbunden ist.

3. Batteriegehäuse (4) nach Anspruch 1 oder 2, **dadurch gekennzeichnet, dass** die Erhebung (17) zumindest in Verschieberichtung längs der Auflageflansche (7, 8) eine Rampe (20) ausbildet.

4. Batteriegehäuse (4) nach einem der Ansprüche 1 bis 3, **dadurch gekennzeichnet, dass** das Schienenelement (11) in der besagten Endmontagelage (19) gegen eine Bewegung des Schienenelements (11) quer zur Längserstreckung der Auflageflansche (7, 8) gesichert ist.

5. Batteriegehäuse (4) nach Anspruch 4, **dadurch gekennzeichnet, dass** besagte Sicherung gegen eine Bewegung des Schienenelements (11) quer zur Längserstreckung der Auflageflansche (7, 8) durch einen Fortsatz (21) bewirkt ist, der im Querschnitt des Ober- oder Untergurtes (13, 14) gesehen am oder nahe des freien Endes (22) desselben angeordnet und zum unmittelbar benachbarten, die Erhebung (17) aufweisenden Auflageflansch (7, 8) hin gerichtet ist.

6. Batteriegehäuse (4) nach Anspruch 5, **dadurch gekennzeichnet, dass** der Fortsatz (21) durch eine Einprägung, Sicke oder Erhebung am oder nahe des freien Endes (22) des Ober- oder Untergurtes (13, 14) oder durch eine Abstellung des freien Endes (22) des Ober- oder Untergurtes (13, 14) gebildet ist.

7. Batteriegehäuse (4) nach einem der Ansprüche 1 bis 6, **dadurch gekennzeichnet, dass** das Schienenelement 11() in der besagten Endmontagelagelage (19) gegen eine Bewegung des Schienenelements (11) in Längsrichtung der Auflageflansche (7, 8) gesichert ist.

8. Batteriegehäuse (4) nach Anspruch 7, **dadurch gekennzeichnet, dass** besagte Sicherung gegen eine Bewegung des Schienenelements (11) in Längsrichtung der Auflageflansche (7, 8) durch zumindest ein lösbares, mechanisches Befestigungsmittel (23) bewirkt ist.

9. Batteriegehäuse (4) nach Anspruch 8, **dadurch gekennzeichnet, dass** das zumindest eine Befestigungsmittel (23) durch eine Schraube, einen Stift, einen Splint oder dgl. mehr, welche/r das Schienenelement (11) mit der Oberschale (6) oder dem Deckel und/oder der Unterschale (5) verbindet, gebildet ist.

## Claims

1. Battery casing (4), with an arrangement for fixing an upper shell (5) or a cover to a lower shell (5) of the battery casing (4), which fixing arrangement has at least one fixing element by means of which, in the region of support flanges (7, 8) which correspond to one another and are laid one atop the other, the upper shell (6) or the cover is connected non-positively to the lower shell (5), wherein the at least one fixing element is formed by a rail element (11) having a U-shaped profile in cross-section, at least in segments, which rail element (11) has a web (12) and a top and a bottom chord (13, 14) and, from the front edge (15) of the support flanges (7, 8) laid one atop the other, is slid onto said support flanges (7, 8), **characterized in that** the rail element (11), in the region of the top and/or bottom chord (13, 14), has at least one recess (16) which is open to the aforesaid front edge (15), which recess (16) is laterally bordered by the top and bottom chord (13, 14), wherein an elevation (17) in the immediately adjacent support flange (7, 8) is associated with the recess (16) such that, as a result of sliding the rail element (11) onto the support flanges (7, 8), the rail element (11) assumes a premounting position (18) **in that** the elevation (17) is received by the recess (16), and such that, as a result of a subsequent movement of the rail element (11) in the longitudinal direction of the support flanges (7, 8), the elevation (17) is positioned in a final mounting position (19) of the rail element (11) below the top and bottom chord (13, 14), and the rail element (11) is non-positively connected to the support flanges (7, 8).

2. The battery casing (4) according to claim 1, **characterized in that** the elevation (17) is designed with an excess in height such that the rail element (11) in the aforesaid final mounting position (19) is connected to the support flanges (7, 8) under pretension.

3. The battery casing (4) according to claim 1 or 2, **characterized in that** the elevation (17) forms a ramp (20) along the support flanges (7, 8), at least in the displacement direction.

4. The battery casing (4) according to any one of claims 1 to 3, **characterized in that** the rail element (11), in the aforesaid final mounting position (19), is secured against a movement of the rail element (11) transverse to the longitudinal extent of the support flanges (7, 8).

5. The battery casing (4) according to claim 4, **characterized in that** said securing against a movement of the rail element (11) transverse to the longitudinal extent of the support flanges (7, 8) is effected via a projection (21) which, as seen in cross-section of the top or bottom chord (13, 14), is arranged at or near the free end (22) of same and is directed towards the immediately adjacent support flange (7, 8) having the elevation (17).

6. The battery casing (4) according to claim 5, **characterized in that** the extension (21) is formed by an impression, bead, or elevation at or near the free end (22) of the upper or lower chord (13, 14), or by a stop of the free end (22) of the upper or lower chord (13, 14).

7. The battery casing (4) according to any one of claims 1 to 6, **characterized in that** the rail element (11), in the aforesaid final mounting position (19), is secured against a movement of the rail element (11) in the longitudinal direction of the support flanges (7, 8).

8. The battery casing (4) according to claim 7, **characterized in that** the aforesaid securing against a movement of the rail element (11) in the longitudinal direction of the support flanges (7, 8) is effected by at least one releasable, mechanical fixing means (23).

9. The battery casing (4) according to claim 8, **characterized in that** the at least one fixing means (23) is formed by a screw, a pin, a split pin, or the like more which connects the rail element (11) to the upper shell (6) or the cover and/or the lower shell (5).

## Revendications

1. Boîtier de batterie (4), comprenant un système pour la fixation d'une coque supérieure (5) ou d'un couvercle à une coque inférieure (5) du boîtier de batterie (4), lequel système de fixation comprend au moins un élément de fixation, au moyen duquel la coque supérieure (6) ou le couvercle est relié de manière à être solidaire à la coque inférieure (5) dans la région de brides de support (7, 8) se correspondant et disposées l'une au-dessus de l'autre, l'au moins un élément de fixation étant constitué d'un élément coulissant (11) dont la section transversale a au moins partiellement la forme d'un U, lequel élément coulissant (11) comportant une traverse (12) ainsi que des sangles supérieure et inférieure (13, 14) et étant repoussé depuis le bord avant (15) des brides de support (7, 8) disposées l'une au-dessus de l'autre sur ces dernières, **caractérisé en ce que** l'élément coulissant (11) présente, dans la région de la sangle supérieure et/ou inférieure (13, 14), au moins une encoche (16) ouverte vers ledit bord avant (15), qui est bordée par la sangle supérieure ou inférieure (13, 14), une saillie (17) dans la bride de support (7, 8) directement voisine étant associée à l'encoche (16) de telle sorte qu'à la suite de la poussée de l'élément coulissant (11) sur les brides de support (7, 8), l'élément coulissant (11) adopte une position de montage initiale (18), **en ce que** la saillie (17) est reçue par l'encoche (16) et qu'à la suite d'un déplacement ultérieur de l'élément coulissant (11) dans la direction longitudinale des brides de support (7, 8), la saillie (17) est positionnée en dessous de la sangle supérieure ou inférieure (13, 14) dans une position de montage finale (19) de l'élément coulissant (11) et l'élément coulissant (11) est relié aux brides de support (7, 8) de manière à être solidaire de celles-ci.

2. Boîtier de batterie (4) selon la revendication 1, **caractérisé en ce que** la saillie (17) est formée avec un excès dans le sens de la hauteur tel que l'élément coulissant (11) est relié dans la position de montage finale (19) susmentionnée sous précontrainte avec les brides de support (7, 8).

3. Boîtier de batterie (4) selon la revendication 1 ou 2, **caractérisé en ce que** la saillie (17) forme une rampe (20) au moins dans la direction de poussée le long des brides de support (7, 8).

4. Boîtier de batterie (4) selon l'une quelconque des revendications 1 à 3, **caractérisé en ce que** l'élément coulissant (11) est fixé dans ladite position de montage finale (19) contre un déplacement de l'élément coulissant (11) transversal à l'extension longitudinale des brides de support (7, 8).

5. Boîtier de batterie (4) selon la revendication 4, **caractérisé en ce que** ladite fixation contre un déplacement de l'élément coulissant (11) transversal à l'extension longitudinale des brides de support (7, 8) est réalisée par un prolongement (21), qui est disposé, vu en coupe transversale de la sangle supérieure ou inférieure (13, 14), sur ou à proximité de l'extrémité libre (22) de celle-ci et dirigé vers la bride de support (7, 8) présentant la saillie (17) directement voisine.

6. Boîtier de batterie (4) selon la revendication 5, **caractérisé en ce que** le prolongement (21) est formé par une impression, une ondulation ou une saillie au niveau ou à proximité de l'extrémité libre (22) de la sangle supérieure ou inférieure (13, 14) ou par un détachement de l'extrémité libre (22) de la sangle supérieure ou inférieure (13, 14).

7. Boîtier de batterie (4) selon l'une quelconque des revendications 1 à 6, **caractérisé en ce que** l'élément coulissant (11) est fixé dans ladite position de montage finale (19) contre un déplacement de l'élément coulissant (11) dans la direction longitudinale des brides de support (7, 8).

8. Boîtier de batterie (4) selon la revendication 7, **caractérisé en ce que** ladite fixation contre un déplacement de l'élément coulissant (11) dans la direction longitudinale des brides de support (7, 8) est réalisée par au moins un moyen de fixation mécanique détachable (23).

9. Boîtier de batterie (4) selon la revendication 8, **caractérisé en ce que** l'au moins un moyen de fixation (23) est formé par une vis, une tige, une clavette ou similaire, qui relie l'élément coulissant (11) avec la coque supérieure (6) ou le couvercle et/ou la coque inférieure (5).
